# EUROPÄISCHE PATENTSCHRIFT

(11) **EP 0 761 481 B1**
(45) Veröffentlichungstag und Bekanntmachung des Hinweises auf die Patenterteilung: **18.10.2000**
(21) Anmeldenummer: 96112312.2
(22) Anmeldetag: 30.07.1996
(51) Int. Cl.: B60G 9/02, B60G 17/005

(54) **Achse eines land- oder bauwirtschaftlichen Fahrzeuges**
Axle of an agricultural or construction works vehicle
Essieu d'un véhicule utilisable en agriculture ou en construction civile

(30) Priorität: 03.08.1995 DE 19528517
(43) Veröffentlichungstag der Anmeldung: 12.03.1997
(73) Patentinhaber: SAME DEUTZ-FAHR S.P.A., 24047 Treviglio (Bergamo) (IT)
(72) Erfinder: Rittmann, Udo, 45475 Mühlheim a.d. Ruhr (DE); Freimann, Rüdiger, 51429 Bergisch Gladbach (DE)
(74) Vertreter: Quinterno, Giuseppe

(56) Entgegenhaltungen:
- EP-A- 0 512 550
- EP-A- 0 553 516
- WO-A-81/03466
- DE-C- 801 756
- FR-A- 971 210
- FR-A- 2 570 029
- US-A- 3 773 348
- US-A- 4 053 171
- US-A- 4 418 932
- US-A- 4 629 211
- PATENT ABSTRACTS OF JAPAN vol. 018, no. 065 (M-1554), 3.Februar 1994 & JP 05 286322 A (SUZUKI MOTOR CORP), 2.November 1993,

## Beschreibung

Die Erfindung betrifft die Aufhängung eines Achskörpers eines Fahrzeuges, insbesondere eines land- oder bauwirtschaftlichen Fahrzeuges, gemäß den Merkmalen des Oberbegriffs des Anspruchs 1.

Aus der EP 0 512 550 ist eine Aufhängung einer Lenkachse eines Fahrzeuges mit einer zwischen Fahrzeugoberbau und Achskörper angeordneten Federeinrichtung bekannt, bei der der Fahrzeugoberbau und das den Achskörper führende Tragelement durch zwei im wesentlichen parallel verlaufende, in etwa gleich lange Schwingen miteinander verbunden sind, die gelenkig am Fahrzeugoberbau einerseits und am Tragelement andererseits im Sinne eines Schwingungsparallelogrammes befestigt sind.

Diese Ausgestaltung ermöglicht zwar eine Federung und Führung der Fahrzeugachse, hat aber den Nachteil, daß die durch eine Bremsung hervorgerufene dynamische Achslastverlagerung eine Einfederung bewirkt. Bei diesem Einfederungsvorgang erfährt das Fahrzeug und insbesondere die Anbaugeräte sowohl im Frontals auch im Heckbereich eines landwirtschaftlichen Fahrzeuges eine erhebliche Beschleunigung um den Nickpol, welche zusätzlich von der Federung aufgenommen werden muß. Besonders bei weit ausladenden Anbaugeräten besteht die Gefahr der Überbeanspruchung von Bauteilen der Federung und der Gerätebefestigung. Das Zurückschwenken aus der eingefederten Position heraus kann zudem dazu führen, daß die Anbaugeräte kurzzeitig in ihren meist spielbehafteten Aufnahmepunkten den festen Kontakt zum Fahrzeug verlieren. Weiterhin kann bei starken Abbremsungen durch die Achslastverlagerung bereits der verfügbare Federweg aufgebraucht sein, so daß ein danach auftretendes Hindernis auf der Straße oder dem Weg nicht mehr abgefedert werden kann.

Land- oder bauwirtschaftliche Fahrzeuge sind oft mit besonders voluminösen Reifen ausgestattet und werden teilweise, zur Erhöhung der Traktion, mit geringem Luftdruck gefahren. Eine derartige Bereifung bildet eine "weiche" Reifenfeder, d. h. die Reifen neigen bei Belastungserhöhung, hervorgerufen z. B. durch Bodenwellen, verstärkt zum Walken. Beim walkenden Reifen wird, ähnlich wie bei verringertem Luftdruck, die Seitenführungskraft geringer, so daß die Spurstabilität des Fahrzeuges abnimmt.

Die gattungsbildende WO-A-81 03 466 offenbart eine Achsanordnung für ein Fahrzeug, bei dem die Achse an einer Längsschwinge gehalten ist. Die Längsschwinge ist ihrerseits mittels einer pneumatischen Feder und Stoßdämpfer mit dem Fahrzeugrahmen verbunden. Als nachteilig wird hierbei angesehen, daß nicht gewährleistet ist, daß bei plötzlichen Bremsmanövern eine gefährliche Nickbewegung des Fahrzeugs auftritt. Außerdem ist bei dem Aufbau dieser Achsanordnung ein Pendeln der Achse zwar möglich, jedoch "schwebt" die Achse, lediglich über die Feder und die Stoßdämpfer gehalten zwischen Endanschlägen. Ein hartes Auflaufen auf diese Endanschläge könnte eventuell ebenfalls zu Problemen bei der Fahrsicherheit führen.

Aus der EP-A-0 512 550 ist ein Hydraulikzylinder bekannt, welcher über ein Steuerventil ansteuerbar ist, um die Federkonstante zu verändern.

Aufgabe der vorliegenden Erfindung ist es, die Aufhängung eines pendelnd gelagerten, federnd abgestützten Achskörper so auszubilden bzw. zu verbessern, daß die Nickbewegung des Fahrzeuges gemindert bzw. ganz unterbunden wird und daß das Fahrzeug bei Einfedervorgängen in seiner Fahrstabilität nicht verschlechtert wird.

Diese Aufgabe wird mit einer Aufhängung eines Achskörpers eines Fahrzeuges erfindungsgemäß gelöst, welche die Merkmale des Patentanspruchs 1 aufweist.

Dadurch kann die Achse wunschgemäß schwingen und federn, wobei durch den Einfedervorgang die Achse verdreht wird, so daß je nach geometrischer Ausgestaltung bzw. Anlenkung der Achse in der Längsschwinge entweder ein Nachlauf erzeugt wird oder der Nachlauf vergrößert wird, so daß durch den Einfedervorgang die Spurstabilität verbessert wird. Durch die Hydraulikzylinder zum Festsetzen der Längsschwinge kann eine beliebige Federung zugelassen werden.

Die erfindungsgemäße Ausgestaltung ist besonders günstig, wenn es sich bei der Achse um eine angetriebene Achse handelt, die über ein Getriebe mit dem Motor des Fahrzeuges in Verbindung steht. Die durch die Beschleunigung bzw. durch die Verzögerung des Motors erzeugten Brems- oder Antriebsmomente wirken sich auf die Längsschwinge aus, so daß beim Verzögern ein gegen das Einnicken wirkendes Moment entsteht. Das entsprechende Antriebsmoment beim Beschleunigen des Motors wirkt dem Anheben bzw. Aufbäumen des Fahrzeuges entgegen.

Die Ausbildung als Längsschwinge hat weiterhin den Vorteil, daß eine solche Anordnung konstruktiv einfach und kompakt ausführbar ist und wenig Änderungen an schon vorhandenen Teilen hervorruft. Denn zum Einsatz der Längsschwinge sind lediglich geringfügige Modifikationen an dem Fahrzeugteil erforderlich, um an diesem über eine Schwenkachse die Längsschwinge anzuordnen, während die Längsschwinge andererseits ein Pendellager aufweist, an dem eine insbesondere serienmäßig gefertigte Achse angeordnet werden kann, wozu der Achskörper ein Pendellager, insbesondere ein in Längserstreckung mittig angeordnetes Pendellager, aufweist, über das der Achskörper pendelnd an der Längsschwinge gelagert ist.

Die Achse ist als bremsbare Achse ausgeführt - dies kann entweder durch Bremsen direkt an der Achse oder Bremsen an einer Achsantriebswelle oder über die Bremsen der zweiten Achse erfolgen, dann wirkt dieses Bremsmoment entsprechend der vorausgegangen Schilderung wie eine Bremsung oder Verzögerung durch den Antriebsmotor. Die Wirkung durch die direkte Bremsung ist allerdings stärker als durch eine Bremsung über den Antriebsmotor. Durch geeignete Wahl des Abstandes zwischen der Achse und der Schwenkachse der Längsschwinge unter Berücksichtigung der Radgröße kann erreicht werden, daß beim Bremsen das auf die Schwinge wirkende Moment, das zum Anheben bzw. Aufbäumen des Fahrzeuges führt, gleich oder größer ist als das Nickmoment, das durch die dynamische Achslastverlagerung auf die Vorderachse durch den Bremsvorgang entsteht, so daß überhaupt keine Absenkung des Fahrzeuges beim Bremsen erfolgt. Dabei kann auch das Zusammendrücken der Reifen, insbesondere der großvolumigen Landwirtschaftsreifen, berücksichtigt werden. Es sei ausdrücklich darauf hingewiesen, daß die Auslegung nicht immer so sein muß, daß das Aufstellmoment größer oder gleich ist, wie das Nickmoment, da es in vielen Fällen ausreicht, daß das Absenken des vorderen Teils des Fahrzeuges durch die Bremsung nur erheblich verringert wird. Dabei spielt der Hydraulikzylinder zum Festsetzen der Längsschwinge eine Rolle.

Indem der Hydraulikzylinder über ein Steuerventil mit einem Druckspeicher verbunden ist, ist ebenfalls in konstruktiv einfacher Weise sichergestellt, daß der Achskörper in einer vorgebbaren Stellung blockierbar ist, wobei mittels des Steuerventils die blockierte Stellung des Hydraulikzylinders einstellbar ist. Gleichzeitig kann auch eine solche Anordnung als Federung des Achskörpers und damit der gesamten Achse ausgebildet sein. Denkbar ist der Einsatz von pneumatisch oder elektrisch (elektro-rheologisch) wirkenden Zylindern. In vorteilhafter Weise sind zwei Zylinder (Hydraulikzylinder) vorgesehen, so daß unter anderem im Falle eines Defektes eines Hydraulikzylinders ein weiterer zur Blockierung zur Verfügung steht.

In Weiterbildung der Erfindung ist die Längsschwinge zwischen dem Fahrzeugteil und dem Achskörper, also im wesentlichen oberhalb der Achse, angeordnet. Dies hat den Vorteil, daß dadurch die kompakte Bauweise unterstützt wird und der Raum unterhalb der Aufstandfläche des Fahrzeuges und des Achskörpers frei bleibt, um somit eine ausreichende Geländegängigkeit und Bodenfreiheit zu erreichen.

Die Längsschwinge als Gußteil auszubilden, hat den Vorteil, daß das Gußteil optimal den Konturen der umgebenden Fahrzeugteile angepaßt werden kann und sämtliche Befestigungs- und Anlenkpunkte, insbesondere für den Hydraulikzylinder, berücksichtigt werden können. Darüber hinaus ergibt sich eine vereinfachte Lagerhaltung, da nur wenige Teile bevorratet werden müssen. Weiterhin ist es von Vorteil, daß die Längsschwinge zumindest Befestigungsmittel für die Aufnahme der Einrichtung zum Festsetzen aufweist. Darüber hinaus können Anschläge vorgesehen werden, die bei einer Maximalbewegung (Maximalauslenkung der Schwinge) an zugeordnete Anschläge am Fahrzeugteil stoßen.

In Weiterbildung der Erfindung weist die Längsschwinge beziehungsweise das Fahrzeugteil zumindest teilweise Ausnehmungen zur Aufnahme der Einrichtung zum Festsetzen, insbesondere der Hydraulikzylinder auf. Dies führt zu einer weiteren Erhöhung der Kompaktheit der Bauweise, wodurch auch Material und damit Gewicht eingespart wird.

Die Längsschwinge kann auch im wesentlichen unterhalb des Achskörpers angeordnet sein. Dies hat den Vorteil, daß der Freiraum zwischen dem Fahrzeugteil bzw. dem Achslagerbock und dem Achskörper vergrößert wird bzw. ein größerer Bewegungsraum für die Achse beim Einfedern gegeben ist. Auch die Durchführung von weiteren Elementen für den Antrieb nach vorne wird dadurch erleichtert.

Besonders darauf hingewiesen sei noch, daß die Hydraulikzylinder, die zum Festsetzen und/oder zum Federn der Achse ausgebildet sein können in Fahrtrichtung gesehen vor oder hinter der Achse oder auch sowohl vor als auch hinter der Achse angeordnet sein können, wodurch die kinematischen und Kraft-Verhältnisse an den Zylindern variiert werden können.

Die erfindungsgemäße Aufhängung ist, soweit sie die Ausgestaltung als Längsschwinge betrifft, im folgenden anhand der Zeichnungen näher beschrieben. Dabei zeigen:
- Figur 1:: eine erfindungsgemäße Aufhängung in Seitenansicht,
- Figur 2:: eine Längsschwinge,
- Figur 3:: die Vorderansicht des Achslagerbockes,
- Figur 4:: einen Schnitt (A) durch den Achslagerbock,
- Figur 5:: einen Hydraulikzylinder,
- Figur 6:: einen Querschnitt durch den Achslagerbock und
- Figur 7:: eine Seitenansicht mit Teilschnitten und modifizierter Längsschwinge.

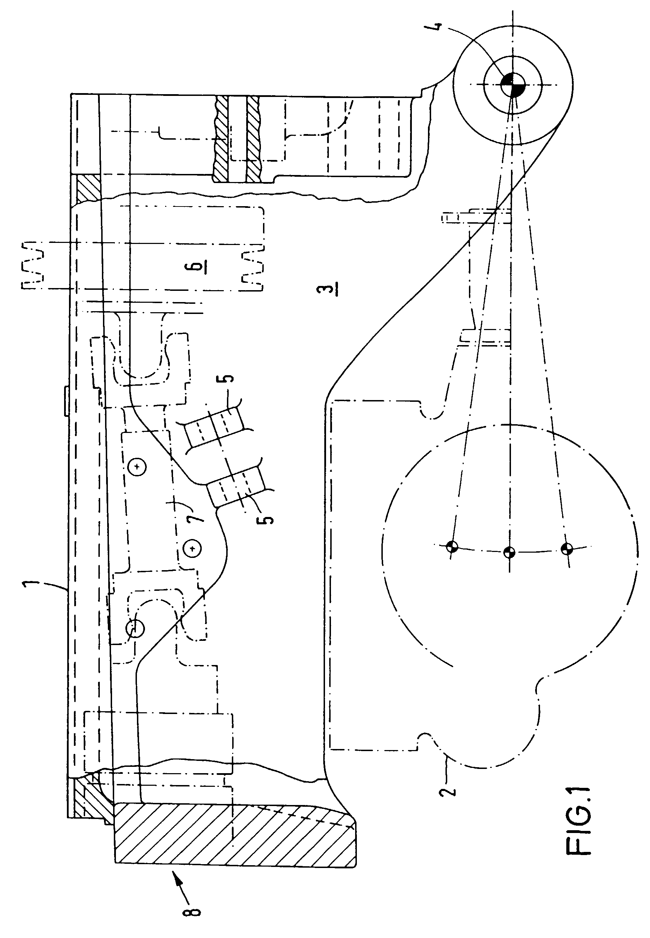

Die Figur 1 zeigt als Fahrzeugteil einen Achslagerbock 1, an dem ein Achskörper 2 über eine Längsschwinge 3 angelenkt ist. Die Längsschwinge 3 ist über eine Schwenkachse 4 gelenkig mit einem Achslagerbock 1 verbunden. Der Achskörper 2 ist Bestandteil einer Radeinheit, insbesondere einer Vorderradeinheit, wobei diese Radeinheit an den Enden des Achskörpers 2 Räder aufweist, die auch gelenkt und/oder angetrieben und/oder gebremst werden können. Der Achskörper 2 ist pendelnd und federnd über die Längsschwinge 3 an dem Achslagerbock 1 gelagert, wie dies in den weiteren Figuren noch gezeigt wird. Weiterhin ist in Figur 1 gezeigt, daß der Achslagerbock 1 Befestigungsmittel 5 aufweist, wobei die Befestigungsmittel 5 ein Ende eines Hydraulikzylinders aufnehmen. Weiterhin ist noch eine Riemenscheibe 6 gezeigt, die an einem Ende eines nicht gezeigten Motors des Fahrzeuges angeordnet ist, wobei auch der Achslagerbock 1 an dem Motorgehäuse oder auch an einem Getriebegehäuse angeflanscht oder ein Bestandteil desselben ist. Durch Ausnehmungen in dem Achslagerbock 1 verläuft weiterhin eine Gelenkwelle 7, die, ausgehend von der Riemenscheibe 6 beziehungsweise der Motorwelle, Kraft auf eine nicht näher gezeigte Frontzapfwelle 8 überträgt. Der Bereich, in dem die Frontzapfwelle 8 angeordnet ist, stellt auch nahezu den Bereich dar, mit dem der Frontbereich des Fahrzeuges abschließt. Die Bewegung der Längsschwinge 3 um die Schwenkachse 4 ermöglicht eine auf einem Kreisbogen gelegene Bewegung des Achskörpers 2, wie dies durch den Mittelpunkt des Achskörpers 2 strichpunktiert dargestellt ist.

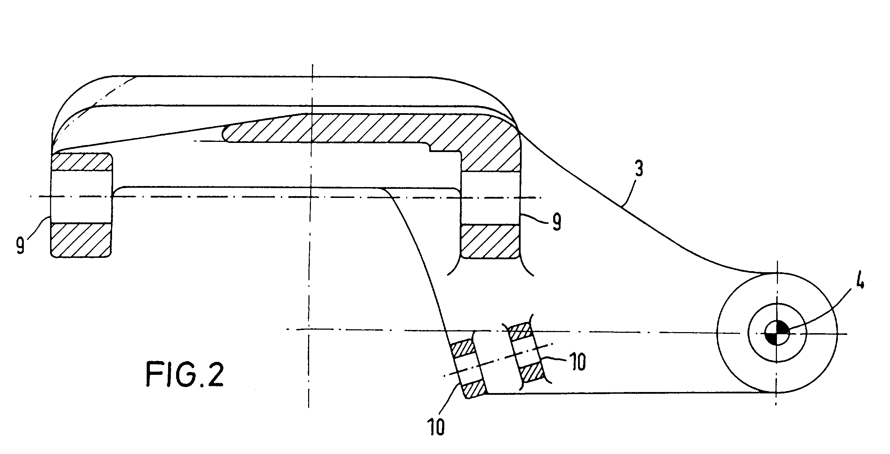

Figur 2 zeigt eine Längsschwinge 3, die im Längsschnitt betrachtet hakenartig ausgebildet ist und zur Aufnahme des in dieser Figur nicht gezeigten Achskörpers 2 Pendellagerstellen 9 aufweist. Weiterhin sind an dieser Längsschwinge 3 Befestigungsmittel 10 vorgesehen, an denen das andere Ende des Hydraulikzylinders befestigt werden kann.

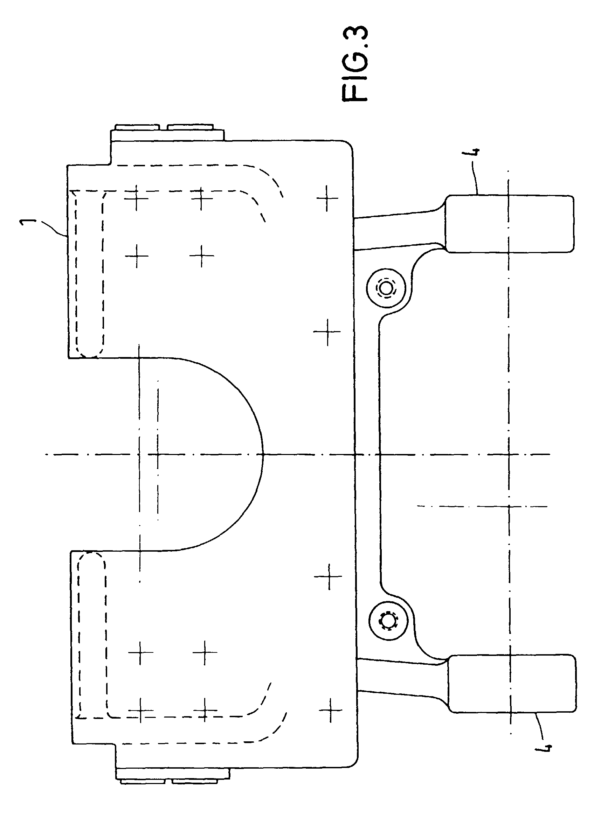

Figur 3 zeigt die Vorderansicht des Achslagerbockes 1 , wobei in der Mitte eine Ausnehmung sichtbar ist, durch die die Gelenkwelle 7 durchgeführt ist. Wiederum gezeigt sind Anlenkpunkte für die Längsschwinge 3.

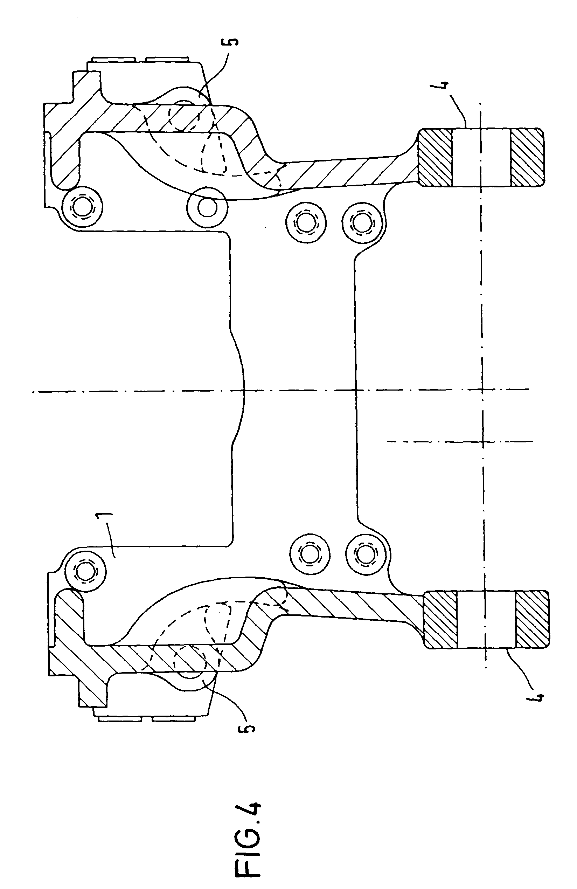

Figur 4 zeigt einen Schnitt (A) durch den Achslagerbock 1 , wobei der Schnitt (A) im Bereich der Schwenkachse 4 liegt. Hierbei sind die Befestigungsmittel 5 erkennbar, wobei im Bereich der Schwenkachse 4 und der Befestigungsmittel 5 Ausnehmungen zu erkennen sind, in die ein Hydraulikzylinder integrierbar ist.

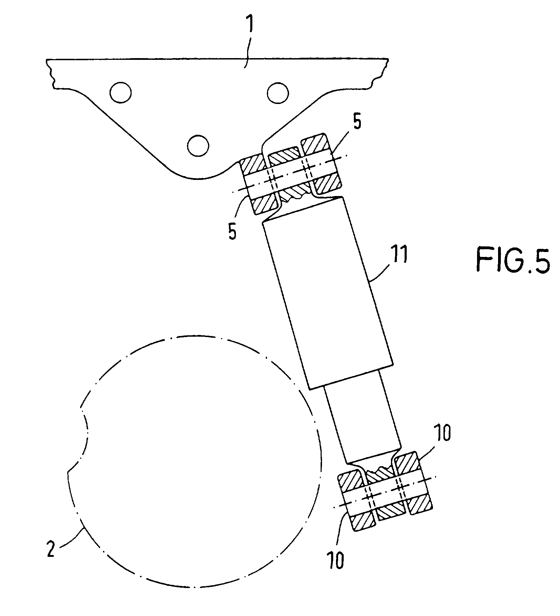

Figur 5 zeigt einen Hydraulikzylinder 11 , der einerseits über die Befestigungsmittel 5 an den Achslagerbock 1 und anderenends über die Befestigungsmittel 10 an der Längsschwinge 3 angeordnet ist. Durch eine entsprechende Steuerung beziehungsweise Regelung der Bewegung des Hydraulikzylinders 11 wird durch Festsetzung die Blockierung erreicht beziehungsweise durch den Hydraulikzylinder 11 eine Federung realisiert. In einfachster Weise ist dabei der Arbeitsraum des Hydraulikzylinders 11 über ein nicht gezeigtes Steuerventil mit einem nicht gezeigten Druckspeicher verbunden, wobei durch entsprechende Beeinflussung des Steuerventiles die Bewegung des Hydraulikzylinders 11 beeinflußbar ist. Die Beeinflussung des Steuerventiles kann entweder manuell (Blockierung oder Freigabe) oder automatisch, in Abhängigkeit weiterer erfaßbarer Größen wie Betriebsparameter des Bremsvorganges des Fahrzeuges erfolgen.

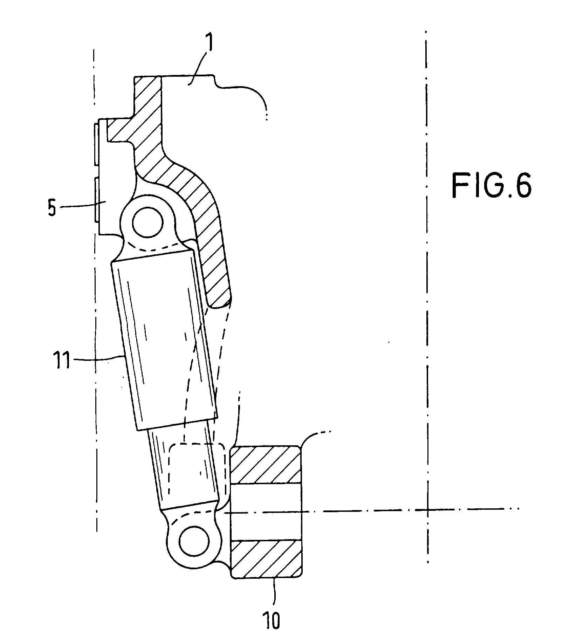

Die Figur 6 zeigt einen Querschnitt durch den Achslagerbock 1, wobei wiederum zu erkennen ist, daß der Hydraulikzylinder 11, angelenkt an den Befestigungsmitteln 5 und 10, in Ausnehmungen angeordnet ist, was zu einer kompakten Bauweise führt.

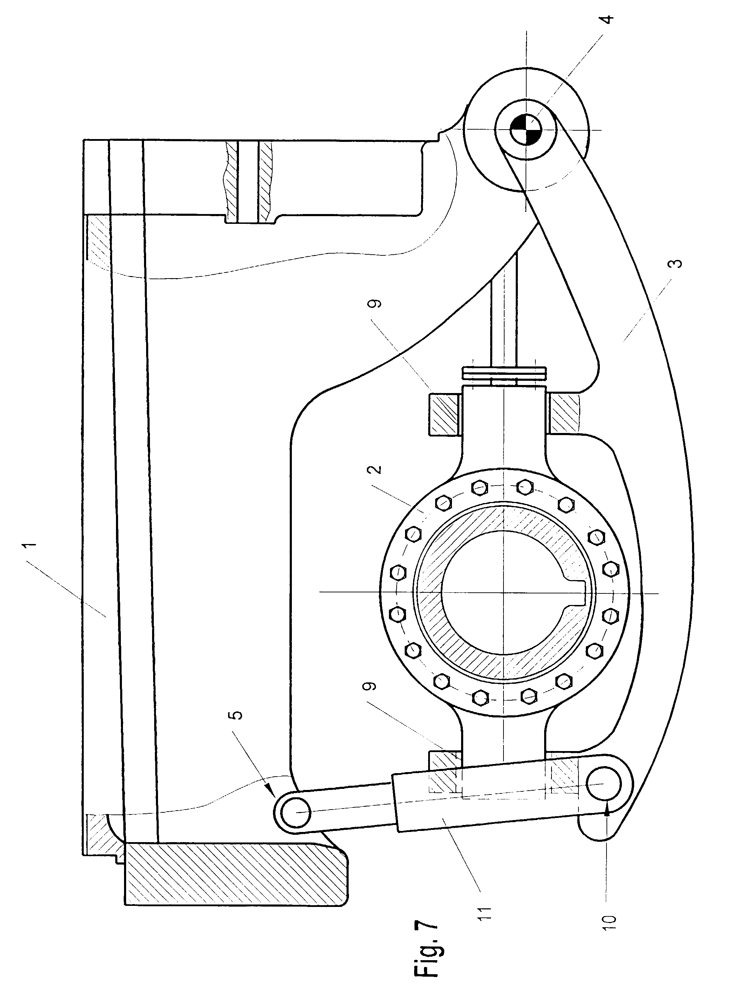

Wie Figur 7 zu entnehmen ist, kann die Längsschwinge 3 auch unterhalb des Achskörpers 2 angeordnet sein und der bzw. die Hydraulikzylinder 11 auch an der der Schwenkachse 4 entgegengesetzten Seite der Längsschwinge 3 angelenkt sein.

## Patentansprüche

1. Aufhängung eines pendelnd gelagerten, federnd abgestützten Achskörpers (2) einer Achse eines Fahrzeuges, insbesondere eines land- oder bauwirtschaftlichen Fahrzeuges, wobei der Achskörper (2) über eine einteilige Längsschwinge (3) an einem Fahrzeugteil angelenkt ist, wobei die Schwenkachse (4) der Längsschwinge (3) im wesentlichen horizontal und quer zur Fahrzeuglängsachse sowie in Fahrtrichtung gesehen hinter dem Achskörper (2) angeordnet ist, wobei die Längsschwinge (3) eine Pendellagerstelle (9) und der Achskörper (2) ein Pendellager (2) aufweisen, und der Achskörper (2) mit seinem Pendellager pendelnd in der Pendellagerstelle (9) gelagert ist, dadurch gekennzeichnet, daß zwischen der Längsschwinge (3) und dem Fahrzeugteil ein Hydraulikzylinder (11) zum Festsetzen und gegebenenfalls Federn der Längsschwinge (3) angeordnet ist, der während des Bremsvorganges der Achse starrgesetzt wird.

2. Aufhängung nach Anspruch 1, dadurch gekennzeichnet, daß das Pendellager, des Achskörpers (2) im wesentlichen mittig in Fahrzeuglängsachse angeordnet ist.

3. Aufhängung nach einem der vorhergehenden Ansprüche, dadurch gekennzeichnet, daß die Längsschwinge (3) zwischen dem Fahrzeugteil und dem Achskörper (2) angeordnet ist.

4. Aufhängung nach 1 oder 2, dadurch gekennzeichnet, daß die Längsschwinge im wesentlichen unterhalb des Achskörpers (2) angeordnet ist.

5. Aufhängung nach einem der vorhergehenden Ansprüche, dadurch gekennzeichnet, daß die Längsschwinge (3) als Gußteil ausgebildet ist.

6. Aufhängung nach einem der vorhergehenden Ansprüche,
dadurch gekennzeichnet, daß das Fahrzeugteil ein Achslagerbock (1) ist.

7. Aufhängung nach einem der vorhergehenden Ansprüche, dadurch gekennzeichnet, daß die Längsschwinge (3) und das Fahrzeugteil Befestigungsmittel (5) oder Ausnehmungen für- die Aufnahme des Hydraulikzylinders (11) aufweist.

8. Aufhängung nach einem der vorhergehenden Ansprüche, dadurch gekennzeichnet, daß die Hydraulikzylinder (11) in Fahrtrichtung gesehen vor und/oder hinter der Achse an der Längsschwinge (3) oder dem Tragelement und dem Achslagerbock (1) angeordnet sind.

## Claims

1. Suspension of an oscillating, sprung axle body (2) of an axle of a vehicle, in particular an agricultural or construction vehicle, wherein the axle body (2) is articulated via a one-piece longitudinal oscillating crank (3) to a vehicle part, wherein the swivel axis (4) of the longitudinal oscillating crank (3) is disposed substantially horizontally and transversally to the longitudinal axis of the vehicle and also, seen in driving direction, behind the axle body (2), wherein the longitudinal oscillating crank (3) comprises a pivot bearing location (9) and the axle body (2) comprises a pivot bearing (2), and the axle body (2) with its pivot bearing is mounted to oscillate in the pivot bearing location (9),
**characterised in that** disposed between the longitudinal oscillating crank (3) and the vehicle part is a hydraulic cylinder (11) for cushioning and/or fixing and possibly cushioning the longitudinal oscillating crank (3), which is rigidly set during the braking operation of the axle.

2. Suspension according to Claim 1,
**characterised in that** the pivot bearing of the axle body (2) is disposed substantially centrally in the longitudinal axis of the vehicle.

3. Suspension according to one of the preceding Claims,
**characterised in that** the longitudinal oscillating crank (3) is disposed between the vehicle part and the axle body (2).

4. Suspension according to 1 or 2,
**characterised in that** the longitudinal oscillating crank is disposed substantially beneath the axle body (2).

5. Suspension according to one of the preceding Claims
**characterised in that** the longitudinal oscillating crank (3) is constructed as a cast piece.

6. Suspension according to one of the preceding Claims,
**characterised in that** the vehicle part is an axle bearing block (1).

7. Suspension according to one of the preceding Claims,
**characterised in that** the longitudinal oscillating crank (3) and the vehicle part comprises attachment means (5) or recesses for the accommodation of the hydraulic cylinder (11) .

8. Suspension according to one of the preceding Claims,
**characterised in that** the hydraulic cylinders (11) are disposed, seen in the driving direction, in front of and/or behind the axle on the longitudinal oscillating crank (3) or the support element and the axle bearing block (1).

## Revendications

1. Suspension d'un corps d'essieu (2) monté de manière pendulaire et supporté de manière élastique d'un essieu d'un véhicule automobile, en particulier d'un véhicule utilisable en agriculture ou dans le bâtiment, le corps d'essieu (2) étant articulé, via une bielle oscillante longitudinale d'une seule pièce (3), sur une partie de véhicule, l'axe de pivotement (4) de la bielle oscillante longitudinale (3) étant agencé en substance horizontalement et transversalement à l'axe longitudinal du véhicule ainsi que, observé dans la direction de déplacement, derrière le corps d'essieu (2), la bielle oscillante longitudinale (3) présentant un support de palier articulé (9) et le corps d'essieu (2) un palier articulé (2) et le corps d'essieu (2) étant monté avec son palier articulé de manière pendulaire dans le support de palier articulé (9), caractérisée en ce que l'on agence entre la bielle oscillante longitudinale (3) et la partie du véhicule un vérin hydraulique (11) pour faire ressort et/ou fixer et éventuellement faire ressort sur la bielle oscillante longitudinale (3), qui est fixée de manière rigide lors de l'opération de freinage de l'essieu.

2. Suspension selon la revendication 1, caractérisée en ce que le palier articulé du corps d'essieu (2) est agencé sensiblement au centre dans l'axe longitudinal du véhicule.

3. Suspension selon l'une quelconque des revendications précédentes, caractérisée en ce que la bielle oscillante longitudinale (3) est agencée entre la partie de véhicule et le corps d'essieu (2).

4. Suspension selon la revendication 1 ou 2, caractérisée en ce que la bielle oscillante longitudinale est agencée sensiblement en dessous du corps d'essieu (2).

5. Suspension selon l'une quelconque des revendications précédentes, caractérisée en ce que la bielle oscillante longitudinale (3) se présente sous la forme d'une pièce moulée.

6. Suspension selon l'une quelconque des revendications précédentes, caractérisée en ce que la partie de véhicule est une boîte d'essieu (1).

7. Suspension selon l'une quelconque des revendications précédentes, caractérisée en ce que la bielle oscillante longitudinale (3) et la partie de véhicule présentent des moyens de fixation (5) ou des cavités pour recevoir le vérin hydraulique (11).

8. Suspension selon l'une quelconque des revendications précédentes, caractérisée en ce que les vérins hydrauliques (11) sont agencés, observés dans la direction de déplacement, devant et/ou derrière l'essieu sur la bielle oscillante longitudinale (3) ou sur l'élément de support et la boîte d'essieu (1).
